Europäisches Patentamt

(19) European Patent Office

Office européen des brevets

(11) Numéro de publication: **0 272 167**
**B1**

## (12) FASCICULE DE BREVET EUROPEEN

(45) Date de publication du fascicule du brevet:
**14.11.90**

(21) Numéro de dépôt: **87402469.8**

(22) Date de dépôt: **03.11.87**

(51) Int. Cl.⁵: **F16H 61/28**, F16H 63/10

(54) Dispositif de commande manuelle de boîte de vitesses mécanique.

(30) Priorité: **07.11.86 FR 8615547**

(43) Date de publication de la demande:
**22.06.88 Bulletin 88/25**

(45) Mention de la délivrance du brevet:
**14.11.90 Bulletin 90/46**

(84) Etats contractants désignés:
**DE**

(56) Documents cités:
**DE-A- 3 019 967**
**FR-A- 1 399 342**
**FR-A- 2 365 841**
**FR-A- 2 449 924**
**US-A- 2 951 392**

(73) Titulaire: **RENAULT VEHICULES INDUSTRIELS Société Anonyme dite:, 129 rue Servient "La Part Dieu", F-69003 Lyon(FR)**

(72) Inventeur: **Venant, André Domaine du Château Brûlé, 7, rue Cavelier de la Salle, F-69330 Meyzieu(FR)**

(74) Mandataire: **Chassagnon, Jean Alain, 8/10, avenue Emile Zola, F-92109 Boulogne-Billancourt(FR)**

## Description

L'invention concerne un dispositif de commande manuelle de boîte de vitesses mécanique qui s'applique notamment à des commandes de véhicules industriels.

Les véhicules industriels modernes demandent des boîtes de vitesses ayant un grand nombre de rapports de marche avant qui sont couramment au nombre de 8. Pour cela, il est nécessaire d'avoir quatre couloirs de sélection et donc cinq couloirs en incluant la marche arrière. De ce fait, il y a une très grande surface de sélection, comme c'est le cas dans le document DE-A 3 019 967.

La trop grande distance entre le premier couloir et le dernier couloir entraîne une mauvaise position pour le conducteur qui doit, pour passer certaines vitesses, appliquer un effort à bout de bras et en arrière. Cette très mauvaise position ergonomique est inacceptable sur les véhicules modernes.

Pour éviter ce dernier inconvénient, on dispose une commande supplémentaire qui agit sur le doubleur de gamme et, de ce fait, la position première vitesse devient la position cinquième vitesse, la deuxième devient la sixième, la troisième devient la septième et la quatrième devient la huitième, d'où un encombrement de sélection qui est réduit de moitié.

Cette solution présente un inconvénient dans le cas où le conducteur oublie d'agir de nouveau sur la commande du doubleur de gamme. Il croit passer la cinquième vitesse en montant de la quatrième vitesse, alors qu'il enclenche brutalement la première vitesse en descendant de la quatrième vitesse. Cette configuration entraîne un surrégime du moteur et de l'embrayage avec un risque de destruction d'organes.

Le but de la présente invention est de proposer un dispositif de commande manuelle de boîte de vitesses qui, tout en conservant une grille de commande avec un encombrement de sélection réduit, permette d'éviter tout oubli de changement de gamme par un circuit simple.

Selon un mode de réalisation de l'invention, le dispositif de commande manuelle de boîte de vitesses mécanique comporte un levier de commande des vitesses qui s'articule autour d'une rotule pour actionner une bielle principale de commande, un levier est solidaire de la bielle principale de commande qui manoeuvre une réglette de commande de boîte de vitesses portant un sélecteur, ledit levier coopérant pour la sélection des vitesses avec une biellette de réaction qui est liée par son autre extrémité à un élément fixe. Le dispositif comporte des moyens de modification d'un des éléments de la chaîne cinématique comportant au moins un actionneur asservi à la commande de changement de gamme, les dits moyens étant disposés entre le pommeau du levier de commande des vitesses et le sélecteur, c'est-à-dire le levier de commande, la bielle principale de commande, la biellette de réaction et la réglette de commande, de manière à modifier la position relative du pommeau et du sélecteur l'un par rapport à l'autre.

Selon un mode de réalisation de l'invention, les moyens de modification s'appliquent sur la biellette de réaction et consistent en une modification de la longueur entre l'extrémité du levier et le point d'attache sur l'élément fixe.

Selon un mode de réalisation de l'invention, les moyens de modification de la longueur entre l'éxtrémité du levier et le point d'attache sur l'élément-fixe consistent en un levier de renvoi dont une des extrémités est montée sur une articulation liée audit élément fixe, et dont l'autre extrémité est assujettie à la tige d'un actionneur lié à un élément fixe par une articulation, le levier de renvoi étant lié à l'extrémité de la biellette de réaction.

Selon un mode de réalisation de l'invention, les moyens de modification de la longueur entre l'extrémité du levier et le point d'attache sur l'élément fixe consistent en un levier de renvoi dont une des extrémités est montée sur une articulation, liée audit élément fixe et dont l'autre extrémité est liée à l'extrémité de la biellette de réaction, le levier de renvoi étant assujetti à un actionneur lié à un élément fixe par une articulation.

Selon un mode de réalisation de l'invention, les moyens de modification de la longueur entre l'extrémité du levier et le point d'attache sur l'élément fixe consistent en un levier de renvoi monté sur une articulation, liée audit élément fixe, ledit levier de renvoi étant lié à une de ses extrémités à l'extrémité de la biellette de réaction et étant assujetti à l'autre extrémité à la tige d'un actionneur lié à un élément fixe par une articulation.

Selon un mode de réalisation de l'invention, les moyens de modification de la longueur entre l'extrémité du levier et le point d'attache sur l'élément fixe consistent en un actionneur disposé dans la biellette de réaction le long de l'axe de ladite biellette de réaction entre l'extrémité du levier et le point d'attache.

Selon un mode de réalisation de l'invention, les moyens de modification s'appliquent sur la réglette de commande de boîte de vitesses et consistent en une modification de la longueur de ladite réglette de commande par l'intermédiaire d'un actionneur disposé dans ladite réglette de commande le long de l'axe de ladite réglette de commande entre le sélecteur et la biellette principale de commande.

Selon un mode de réalisation de l'invention, les moyens de modification s'appliquent sur la bielle principale de commande et consistent en deux demi-biellettes principales comportant chacune et respectivement un levier solidaire desdites demi-biellettes principales, l'extrémité de l'un des leviers étant reliée à l'extrémité de l'autre levier par une biellette de liaison, un actionneur étant disposé dans ladite biellette de liaison et le long de l'axe de ladite biellette de liaison, les deux demi-biellettes principales étant libres en rotation l'une par rapport à l'autre et liées en translation par un accouplement.

Selon un mode de réalisation de l'invention, les moyens de modification s'appliquent sur le levier de commande des vitesses et consistent en ce que ledit levier de commande comporte deux demi-leviers de commande liés l'un à l'autre par une articulation dans le plan de la sélection, les deux demi-leviers de commande comportant chacun et respectivement un levier solidaire desdits demi-leviers de commande, l'extrémité de l'un des leviers étant reliée à l'extrémité de l'autre levier par une biellette, un actionneur étant disposé dans ladite biellette et le long de l'axe de ladite biellette.

Selon un mode de réalisation de l'invention, un deuxième actionneur est ajouté aux moyens de modification de l'élément de la chaîne cinématique considéré de manière à obtenir un deuxième état de sélection des vitesses.

Selon un mode de réalisation de l'invention, l'actionneur est disposé dans la biellette de réaction, le long de l'axe de ladite biellette de réaction entre l'extrémité du levier et l'extrémité de ladite biellette de réaction, un capteur de position étant disposé sur la réglette de commande.

Selon un mode de réalisation de l'invention, l'actionneur consiste en un vérin.

Selon un mode de réalisation de l'invention, le procédé de commande manuelle de boîte de vitesses mécanique consiste en ce que la commande en sélection après la dernière vitesse de la première gamme déclenche un signal de commande qui donne simultanément l'ordre de passage à la deuxième gamme et le changement d'état de l'actionneur.

Selon un mode de réalisation de l'invention, le procédé de commande consiste en ce qu'un deuxième signal émis par un capteur de position commande le changement d'état d'un deuxième actionneur.

Le dispositif de commande manuelle de boîte de vitesses mécanique selon l'invention présente ainsi l'avantage d'offrir une surface de sélection qui peut être réduite à volonté, de manière à offrir au conducteur la meilleur position ergonomique tout en interdisant toute fausse manoeuvre dans la commande des différentes vitesses.

L'invention sera mieux comprise par l'étude d'un ensemble de réalisation particulier décrit à titre nullement limitatif et illustré par les dessins annexés, sur lesquels :

- la figure 1 est une vue en perspective cavalière d'un dispositif de commande manuelle de boîte de vitesses mécanique sur lequel s'applique l'invention ;
- la figure 2 est une vue schématique de la figure 1 ;
- la figure 3 est une vue schématique d'un premier mode de réalisation de l'invention ;
- la figure 4 est une vue schématique d'un autre mode de réalisation de l'invention ;
- la figure 5 est une vue schématique d'un autre mode de réalisation de l'invention ;
- la figure 6 est une vue schématique d'un autre mode de réalisation de l'invention ;
- la figure 7 est une vue schématique d'un autre mode de réalisation de l'invention ;
la figure 8 est une vue schématique d'un autre mode de réalisation de l'invention ;
- la figure 9 est une vue schématique d'un autre mode de réalisation de l'invention ;
- la figure 10 est une vue schématique d'un autre mode de réalisation de l'invention ;

Le dispositif selon l'invention se rapporte à une commande manuelle de boîte de vitesses mécanique. Cette commande manuelle comporte un levier de commande 1 des vitesses qui s'articule autour d'une rotule 11, et qui actionne une bielle principale de commande 2. Cette bielle principale de commande 2 est munie d'un levier 12, qui est solidaire de ladite bielle principale de commande 2. Une réglette de commande 4 de boîte de vitesses est manoeuvrée par ladite bielle principale de commande 2. Cette réglette de commande 4 porte un sélecteur 7.

D'autre part, le levier 12 coopère avec une biellette de réaction 3, qui est liée par son autre extrémité 13 à un élément fixe 8, ceci afin de permettre la sélection des vitesses.

Le dispositif selon l'invention comporte des moyens de modification d'un des éléments de la chaîne cinématique disposée entre le pommeau 14 du levier de commande 1 des vitesses et le sélecteur 7. Ce qui signifie que les moyens de modification s'appliquent soit sur le levier de commande 1, soit sur la bielle principale de commande 2, soit sur la biellette de réaction 3, ou soit sur la réglette de commande 4, ceci afin de pouvoir modifier la position relative du pommeau 14 du levier de commande 1 des vitesses et du sélecteur 7 l'un par rapport à l'autre.

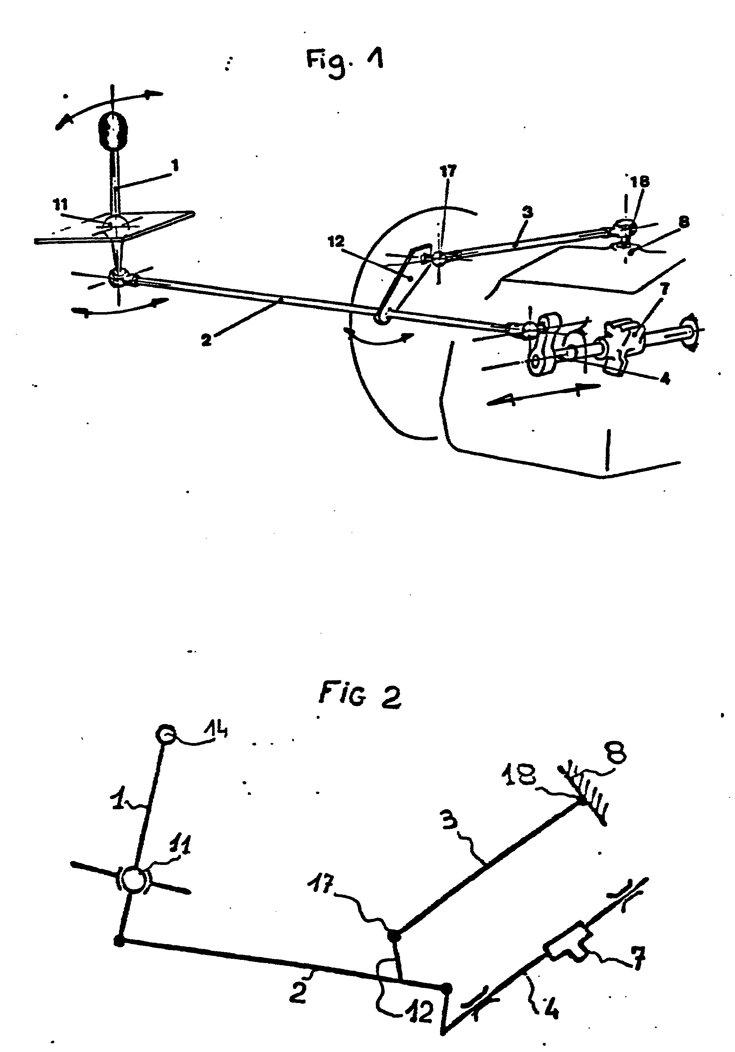

La figure 1 représente en perspective cavalière une commande manuelle de boîte de vitesses mécanique sur laquelle s'applique le dispositif de l'invention.

La figure 2 est une vue schématique correspondant à la figure 1.

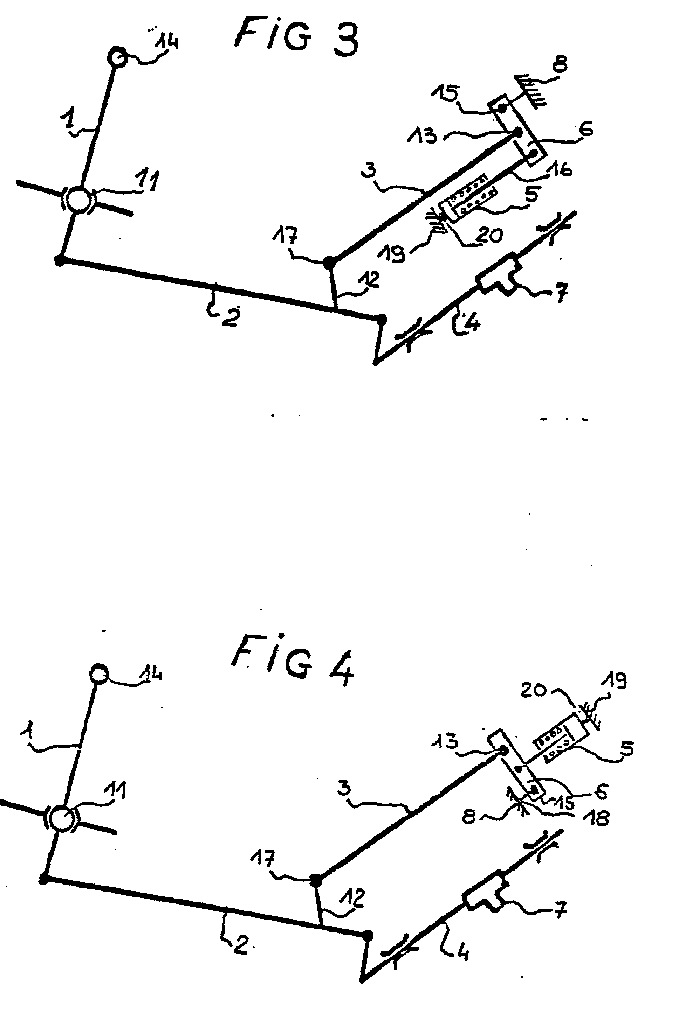

Les figures 3, 4, 5, 6, 7, 8, 9 et 10 correspondent aux différents modes de réalisation du dispositif de commande manuelle de boîte de vitesses mécanique selon l'invention.

Les moyens de modification qui s'appliquent sur la biellette de réaction 3 sont représentés sur les figures 3, 4, 5, 6 et 10.

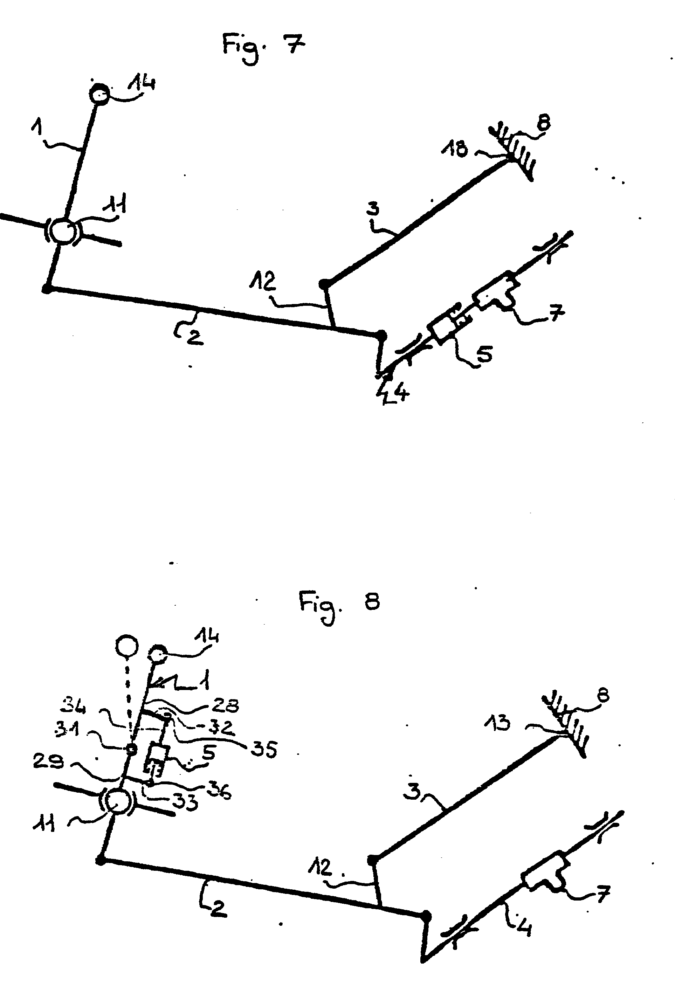

Les moyens de modification qui s'appliquent sur la réglette de commande 4 sont représentés sur la figure 7.

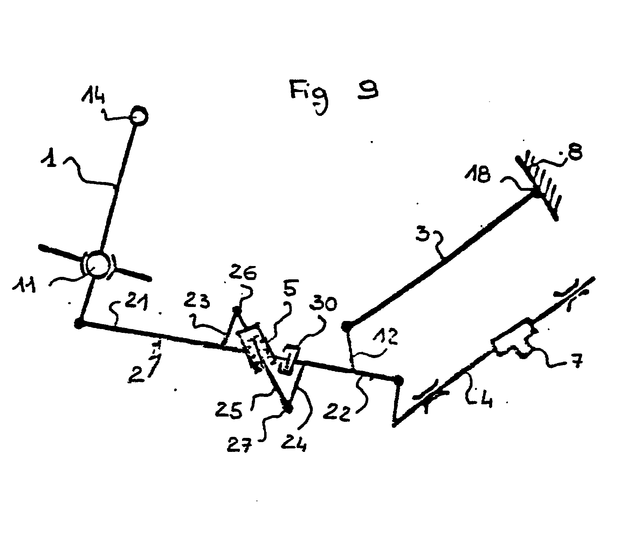

Les moyens de modification qui s'appliquent sur la bielle principale de commande 2 sont représentés sur la figure 9.

Les moyens de modification qui s'appliquent sur le levier de commande 1 des vitesses sont représentés sur la figure 8.

Les moyens de modification qui s'appliquent sur la biellette de réaction 3 consistent en une modification de la longuer de ladite biellette de réaction 3 c'est-à-dire la longueur entre l'extrémité 17 du levier 12 sur laquelle ladite biellette 3 s'articule, et le point d'attache 18 de ladite biellette de réaction 3 sur l'élément fixe 8.

Sur la figure 3, les moyens de modification de la longueur entre l'extrémité 17 du levier 12 et le point d'attache 18 sur l'élément fixe 8, consistent en un levier de renvoi 6, dont une des extrémités est montée sur une articulation 15 liée audit élément fixe 8, et dont l'autre extrémité est assujettie à la tige 16 d'un actionneur 5 lié à un élément fixe 19 par une articulation 20. Le levier de renvoi 6 est lié à l'extrémité 13 de la biellette de réaction 3. Dans le cas de la figure 3 l'actionneur est un vérin qui peut être alimenté de façon pneumatique.

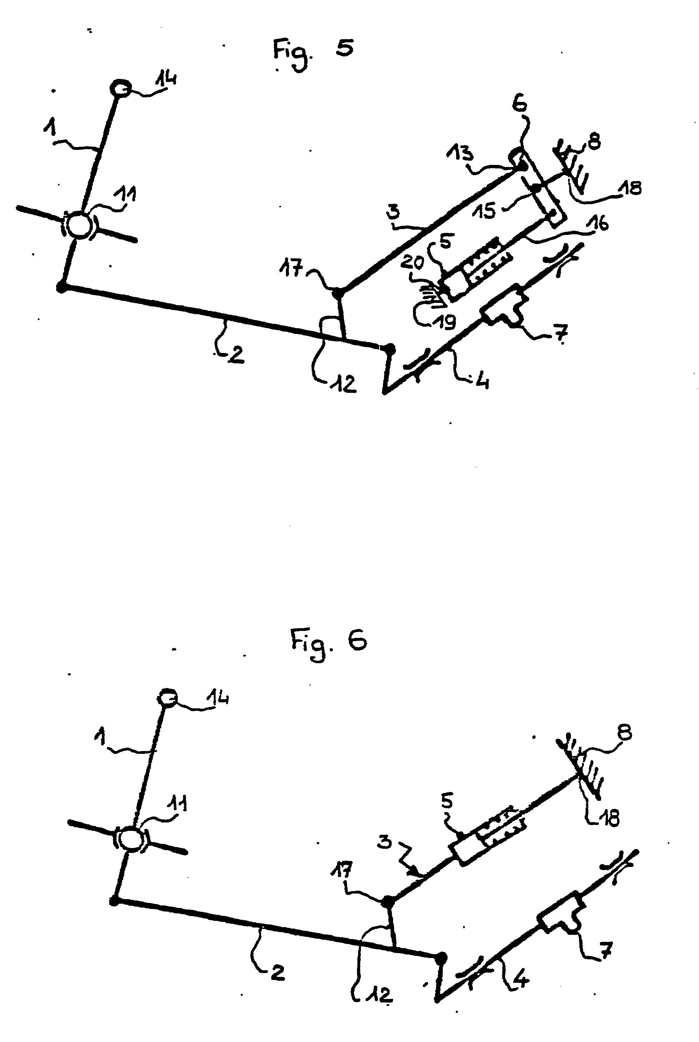

Les moyens de modification de la longueur entre l'extrémité 17 du levier 12 et le point d'attache 18 sur l'élément fixe 8 représenté sur la figure 4, consistent en un levier de renvoi 6 dont une des extrémités est montée sur une articulation 15 liée audit élément fixe 8 et dont l'autre extrémité est liée à l'extrémité 13 de la biellette de réaction 3. Le levier de renvoi 6 est assujetti à un actionneur 5, qui est lié à un élément fixe 19 par une articulation 20. L'actionneur 5 est un vérin qui peut être pneumatique.

La figure 5 représente des moyens de modification de la longueur entre l'éxtrémité 17 du levier 12 et le point d'attache 18 sur l'élément fixe 8. Ces moyens de modification consistent en un levier de renvoi 6 qui est monté sur une articulation 15 liée audit élément fixe 8. Le levier de renvoi 6 est lié à une de ses extrémités à l'extrémité 13 de la biellette de réaction 3, et est assujetti à l'autre extrémité à la tige 16 d'un actionneur 5. Cet actionneur 5 est lui-même lié à un élément fixe 19 par une articulation 20. L'actionneur 5 est un vérin qui peut être alimenté de façon pneumatique.

La figure 6 représente des moyens de modification de la longueur entre l'extrémité 17 du levier 12 et le point d'attache 18 sur l'élément fixe 8, ces moyens consistent en un actionneur 5 qui est disposé dans la biellette de réaction 3, et le long de l'axe de ladite biellette de réaction 3. Cet actionneur 5 se trouve ainsi entre l'extrémité 17 du levier 12 et le point d'attache 18 sur l'élément fixe 8. L'actionneur 5 est un vérin qui peut être pneumatique.

La figure 7 représente des moyens de modification qui s'appliquent sur la réglette de commande 4 de boîte de vitesses. Ces moyens consistent en une modification de la longueur de ladite réglette de commande 4 par l'intermédiaire d'un actionneur 5. Cet actionneur 5 est disposé dans ladite réglette de commande 4, et le long de l'axe de ladite réglette de commande 4. C'est-à-dire que l'actionneur 5 se situe entre le sélecteur 7 et la biellette principale de commande 2. L'actionneur 5 est un vérin qui peut être pneumatique.

La figure 9 représente des moyens de modification qui s'appliquent sur la bielle principale de commande 2. Ces moyens consistent en deux demi-biellettes principales respectivement référencées 21 et 22. La demi-biellette principale 21 comporte un levier 23, qui lui est solidaire ; et la demi-biellette 22 comporte un levier 24 qui lui est solidaire. L'extrémité 26 du levier 23 est reliée à l'extrémité 27 du levier 24 par une biellette de liaison 25. Un actionneur 5 est disposé dans ladite biellette de liaison 25 le long de l'axe de ladite biellette de liaison 25. Les deux demi-biellettes principales 21 et 22 sont libres en rotation l'une par rapport à l'autre, et sont liées en translation par un accouplement 30. L'actionneur 5 est un vérin, qui peut être à commande pneumatique.

La figure 8 représente des moyens de modification qui s'appliquent sur le levier de commande 1 des vitesses. Ces moyens consistent en ce que ledit levier de commande 1 comporte deux demi-leviers de commande respectivement référencés 28 et 29. Ces deux demi-leviers de commande 28 et 29 sont liés l'un par rapport à l'autre par une articulation 31 dans le plan de sélection. Le demi-levier de commande 28 comporte un levier 32 qui lui est soliaire, et le demi-levier de commande 29 comporte un levier 33 qui lui est solidaire. L'extrémité 35 du levier 32 est reliée à l'extrémité 36 du levier 33 par une biellette 34. Un actionneur 5 est disposé dans ladite biellette 34 et le long de l'axe de ladite biellette 34. Cet actionneur 5 est un vérin qui peut être à commande pneumatique.

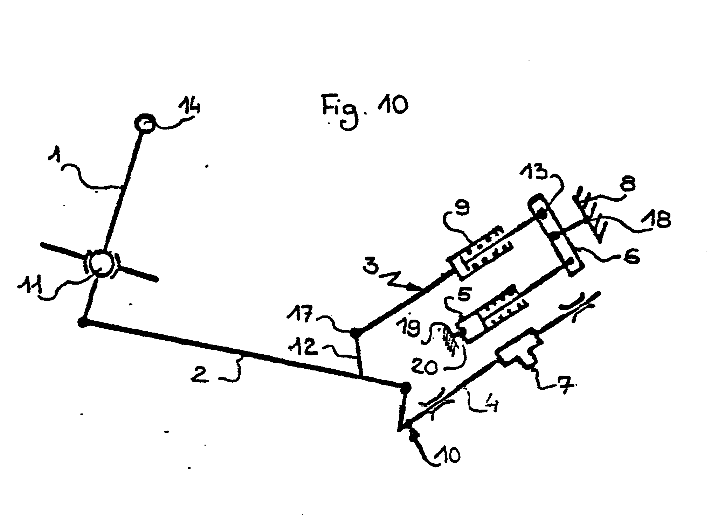

La figure 10 représente une variante de la figure 5. Dans le cas de la figure 10, un deuxième actionneur 9 est ajouté dans la biellette de réaction 3, et le long de l'axe de ladite biellette de réaction 3.

L'actionneur 9 est ainsi disposé entre l'extrémité 17 du levier 12 et l'extrémité 13 de la biellette de réaction 3. De plus, un capteur de position 10 est disposé sur la réglette de commande 4. L'actionneur 9 est un vérin qui peut être pneumatique.

Selon l'invention et dans ces différents modes de réalisation, l'actionneur 5 est asservi à la commande du relais de changement de gamme. Le procédé de commande manuelle de boîte de vitesses mécanique selon l'invention consiste en ce que la commande en sélection après la dernière vitesse de la première gamme, déclenche un signal de commande. Ce signal de commande donne simultanément l'ordre de passage à la deuxième gamme et le changement d'état de l'actionneur 5.

Dans le cas de la figure 10, le procédé de commande manuelle de boîte de vitesses mécanique comporte de plus un deuxième signal qui est émis par le capteur de position 10, et qui commande de changement d'état de l'actionneur 9. Lors de la manoeuvre du levier de commande 1 pour tendre vers un changement de couloir de sélection, le mouvement résultant de la réglette de commande 4 est enregistré par le capteur de position 10, et le signal induit entraîne un changement d'état de l'actionneur 9 qui est monté sur la biellette de réaction 3.

**Revendications**

1. Dispositif de commande manuelle de boîte de vitesses mécanique comportant un levier de commande (1) des vitesses qui s'articule autour d'une rotule (11) pour actionner une bielle principale de commande (2), un levier (12) est solidaire de la bielle principale de commande (2) qui manoeuvre une réglette de commande (4) de boîte de vitesses portant un sélecteur (7), ledit levier (12) coopérant pour la sélection des vitesses avec une biellette de réaction (3) qui est liée par son autre extrémité (13) à un élément fixe (8), caractérisé en ce qu'il comporte des moyens de modification d'un des éléments de la chaîne cinématique comportant au moins un actionneur (5) asservi à la commande de changement de gamme, les dits moyens étant disposés entre le pommeau (14) du levier de commande (1) des vitesses et le sélecteur (7), c'est-à-dire le levier de commande (1), la bielle principale de commande (2), la biellette de réaction (3) et la réglette de commande (4). de manière à modifier la position relative du pommeau (14) et du sélecteur (7) l'un par rapport à l'autre.

2. Dispositif de commande selon la revendication 1 caractérisé en ce que les moyens de modification s'appliquent sur la biellette de réaction (3) et consistent en une modification de la longueur entre l'extrémité (17) du levier (12) et le point d'attache (18) sur l'élément fixe (8).

3. Dispositif de commande selon la revendication 2 caractérisé en ce que les moyens de modification de la longueur entre l'extrémité (17) du levier (12) et le point d'attache (18) sur l'élément fixe (8) consistent en un levier de renvoi (6) dont une des extrémités est montée sur une articulation (15), liée audit élément fixe (8) et dont l'autre extrémité est assujettie à la tige (16) d'un actionneur (5) lié à un élément fixe (19) par une articulation (20), le levier de renvoi (6) étant lié à l'extrémité (13) de la biellette de réaction (3).

4. Dispositif de commande selon la revendication 2 caractérisé en ce que les moyens de modification de la longueur entre l'extrémité (17) du levier (12) et le point d'attache (18) sur l'élément fixe (8) consistent en un levier de renvoi (6) dont une des extrémités est montée sur une articulation (15) liée audit élément fixe (8), et dont l'autre extrémité est liée à l'extrémité (13) de la biellette de réaction (3), le levier de renvoi (6) étant assujetti à un actionneur (5) lié à un élément fixe (19) par une articulation (20).

5. Dispositif de commande selon la revendication 2 caractérisé en ce que les moyens de modification de la longueur entre l'extrémité (17) du levier (12) et le point d'attache (18) sur l'élément fixe (8) consistent en un levier de renvoi (6) monté sur une articulation (15), liée audit élément fixe (8), ledit levier de renvoi (6) étant lié par une de ses extrémités à l'extrémité (13) de la biellette de réaction (3) et étant assujetti à l'autre extrémité à la tige (16) d'un actionneur (5) lié à un élément fixe (19) par une articulation (20).

6. Dispositif de commande selon la revendication 2 caractérisé en ce que les moyens de modification de la longueur entre l'extrémité (17) du levier (12) et le point d'attache (18) sur l'élément fixe (8) consistent en un actionneur (5) disposé dans la biellette de réaction (3) le long de l'axe de ladite biellette de réaction (3) entre l'extrémité (17) et le point d'attache (18).

7. Dispositif de commande selon la revendication 1 caractérisé en ce que les moyens de modification s'appliquent sur la réglette de commande (4) de boîte de vitesses et consistent en une modification de la longueur de ladite réglette de commande (4) par l'intermédiaire d'un actionneur (5) disposé dans ladite réglette de commande (4) le long de l'axe de ladite réglette de commande (4) entre le sélecteur (7) et la biellette principale de commande (2).

8. Dispositif de commande selon la revendication 1 caractérisé en ce que les moyens de modification s'appliquent sur la bielle principale de commande (2) et consistent en deux demi-biellettes principales (21) et (22) comportant chacune et respectivement un levier (23) et (24) solidaires desdites demi-biellettes principales (21, 22), l'extrémité (26) du levier (23) étant reliée à l'extrémité (27) du levier (24) par une biellette de liaison (25), un actionneur (5) étant disposé dans ladite biellette de liaison (25) et le long de l'axe de ladite biellette de liaison (25), les deux demi-biellettes principales (21, 22) étant libres en rotation l'une par rapport à l'autre et liées en translation par un accouplement (30).

9. Dispositif de commande selon la revendicaiton 1 caractérisé en ce que les moyens de modification s'appliquent sur le levier de commande (1) des vitesses et consistent en ce que ledit levier de commande (1) comporte deux demi-leviers de commande (28, 29) liés l'un à l'autre par une articulation (31) dans le plan de la sélection, les deux demi-leviers de commande (28, 29) comportant chacun et respectivement un levier (32, 33) solidaire desdits demi-leviers de commande (28, 29), l'extrémité (35) du levier (32) étant reliée à l'extrémité (36) du levier (33) par une biellette (34), un actionneur (5) étant disposé dans ladite biellette (34) et le long de l'axe de ladite biellette (34).

10. Dispositif de commande selon l'une des revendications 2-7-8-9 caractérisé en ce qu'un deuxième actionneur (9) est ajouté aux moyens de modification de l'élément de la chaîne cinématique considéré de manière à obtenir un deuxième état de sélection des vitesses.

11. Dispositif de commande selon la revendication 10 caractérisé en ce que le deuxième actionneur (9) est disposé dans la biellette de réaction (3), le long de l'axe de ladite biellette de réaction (3) entre l'extrémité (17) du levier (12) et l'extrémité (13), un capteur de position (10) étant disposé sur la réglette de commande (4).

12. Dispositif de commande selon l'une des revendications 3-4-5-6-7-8-9 caractérisé en ce que l'actionneur (5) consiste en un vérin.

13. Dispositif de commande selon la revendication 10 caractérisé en ce que le deuxième actionneur (9) consiste en un vérin.

14. Procédé de commande manuelle de boîte de vitesses mécanique selon l'une des revendications 3-4-5-6-7-8-9 caractérisé en ce que la commande de sélection après la dernière vitesse de la première gamme déclenche un signal de commande qui donne simultanément l'ordre de passage à la deuxième gamme et le changement d'état de l'actionneur (5).

15. Procédé de commande selon la revendication 14 caractérisé en ce qu'un deuxième signal émis par un capteur de position (10) commande le changement d'état d'un deuxième actionneur (9).

## Patentansprüche

1. Handbetätigte Steuervorrichtung für mechanische Schaltgetriebe, mit einem Gangschalthebel (1), der an einem Kugelgelenk (11) angelenkt ist, um eine Steuerstange (2) zu betätigen, wobei ein Hebel (12) fest mit der Steuerstange (2) verbunden ist zur Handhabung einer Getriebeschaltstange (4), die ein Wählteil (7) trägt, wobei der Hebel (12) mit einem Stellteil (3) zur Gangwahl zusammenwirkt, dessen anderes Ende (13) mit einem feststehenden Teil (8) verbunden ist, dadurch gekennzeichnet, daß sie eine Anordnung zur Veränderung eines der Teile der kinematischen Kette aufweist, mit wenigstens einem Betätigungsteil (5), das von der Steuervorrichtung für die Gangbereichsänderung geregelt wird und die zwischen dem Schaltknauf (14) des Gangschalthebels (1) und dem Wählteil (7) angeordnet ist, d.h. der Gangschalthebel (1), die Steuerstange (2), das Stellteil (3) und die Schaltstange (4), dergestalt, daß die Relativstellungen von Schaltknauf (14) und Wählteil (7) zueinander veränderlich sind.

2. Steuervorrichtung nach Anspruch 1, dadurch gekennzeichnet, daß die Anordnung zur Veränderung im Stellteil (3) verwirklicht ist in Form einer Veränderung deren Länge zwischen dem Ende (17) des Hebels (12) und dem Befestigungspunkt (18) am feststehenden Teil (8).

3. Steuervorrichtung nach Anspruch 2, dadurch gekennzeichnet, daß die Anordnung zur Veränderung der Länge zwischen dem Ende (17) des Hebels (12) und dem Befestigungspunkt (18) des feststehenden Teils (8) aus einem Umlenkhebel (6) bestehen, dessen eines Ende an einem Gelenk (15) angeordnet ist, das mit dem feststehenden Teil (8) verbunden ist und dessen anderes Ende befestigt ist an einem Stab (16) des Betätigungsteils (5), das über ein Gelenk (20) mit einem feststehenden Teil (19) verbunden ist, wobei der Umlenkhebel (16) mit dem Ende (13) des Stellteils (3) verbunden ist.

4. Steuervorrichtung nach Anspruch 2, dadurch gekennzeichnet, daß die Anordnung zur Veränderung der Länge zwischen dem Ende (17) des Hebels (12) und dem Befestigungspunkt (18) am feststehenden Teil (8) aus einem Umlenkhebel (6) besteht, dessen eines Ende an einem Gelenk (15) befestigt ist, das mit dem feststehenden Teil (8) verbunden ist und dessen anderes Ende befestigt ist am Ende (13) des Stellteils (3), wobei der Umlenkhebel (6) von einem Betätigungsteil (5) gesteuert wird, das über ein Gelenk (20) mit einem feststehenden Teil (19) verbunden ist.

5. Steuervorrichtung nach Anspruch 2, dadurch gekennzeichnet, daß die Anordnung zur Veränderung der Länge zwischen dem Ende (17) des Hebels (12) und dem Befestigungspunkt (18) des feststehenden Teils (8) aus einem Umlenkhebel (6) besteht, der an einem Gelenk (15) angeordnet ist, welches mit dem feststehenden Teil (8) verbunden ist, wobei der Umlenkhebel (6) mit einem seiner Enden mit dem Ende (13) des Stellteils (3) verbunden ist und sein anderes Ende vom Stab (16) des Betätigungsteils (5) gesteuert wird, das mit dem feststehenden Teil (19) über ein Gelenk (20) verbunden ist.

6. Steuervorrichtung nach Anspruch 2, dadurch gekennzeichnet, daß die Anordnung zur Veränderung der Länge zwischen dem Ende (17) des Hebels (12) und dem Befestigungspunkt (18) des feststehenden Teils (8) aus einem Betätigungsteil (5) besteht, das im Stellteil (3) entlang der Achse des Stellteils (3) zwischen dem Ende (17) und dem Befestigungspunkt (18) angeordnet ist.

7. Steuervorrichtung nach Anspruch 1, dadurch gekennzeichnet, daß die Anordnung zur Veränderung in der Schaltstange (4) verwirktlicht ist in Form einer Veränderung der Länge dieser Schaltstange (4) mittels eines Betätigungsteils (5), das in der Schaltstange (4) entlang der Achse dieser Schaltstange (4) zwischen dem Wählteil (7) und der Steuerstange (2) angeordnet ist.

8. Steuervorrichtung nach Anspruch 1, dadurch gekennzeichnet, daß die Anordnung zur Veränderung in der Steuerstange (2) verwirklicht ist und aus zwei Halbstangen (21 und 22) besteht, deren jede einen Hebel (23 bzw. 24) aufweist, die mit den Halbstangen (21, 22) fest verbunden sind, wobei das Ende (26) des Hebels (23) mit dem Ende (27) des Hebels (24) über eine Verbindungsstange (25) verbunden ist und wobei ein Betätigungsteil (5) in der Verbindungsstange (25) entlang der Achse dieser Verbindungsstange (25) vorgesehen ist und die beiden Halbstangen (21, 22) zueinander verdrehbar sind jedoch in Verschieberichtung durch eine Kupplung (30) verbunden sind.

9. Steuervorrichtung nach Anspruch 1, dadurch gekennzeichnet, daß die Anordnung zur Veränderung im Gangschalthebel (1) verwirktlicht ist, und zwar dadurch, daß der Gangschalthebel (1) zwei Halb-Steuerhebel (28, 29) aufweist, die durch ein Gelenk (31) in der Wählebene miteinander verbunden sind, wobei die beiden Halb-Steuerhebel (28, 29) jeweils einen Hebel (32 bzw. 33) aufweisen, die fest mit dem Halb-Steuerhebeln (28, 29) verbunden sind, wobei das Ende (35) des Hebels (32) mit dem Ende (36) des Hebels (33) über eine Stange (34) verbunden ist und wobei ein Betätigungsteil (5) in der Stange (34) entlang deren Achse angeordnet ist.

10. Steuervorrichtung nach einem der Ansprüche 2-7-8-9, dadurch gekennzeichnet, daß ein zweites Betätigungsteil (9) der Anordnung zur Veränderung eines Teils der kinematischen Kette zugeordnet ist und so ausgelegt ist, daß ein zweiter Gangwahlbereich erhalten wird.

11. Steuervorrichtung nach Anspruch 10, dadurch gekennzeichnet, daß das zweite Betätigungsteil (9) im Stellteil (3) entlang der Achse dieses Stellteils (3) vorgesehen ist zwischen dem Ende (17) des Hebels (12) und dem Ende (13), wobei ein Positionsfühler (10) an der Schaltstange (4) vorgesehen ist.

12. Steuervorrichtung nach einem der Ansprüche 3-4-5-6-7-8-9, dadurch gekennzeichnet, daß das Betätigungsteil (5) eine Hebevorrichtung aufweist.

13. Steuervorrichtung nach Anspruch 10, dadurch gekennzeichnet, daß das zweite Betätigungsteil (9) eine Hebevorrichtung aufweist.

14. Verfahren zum handbetätigten Steuern für mechanische Schaltgetriebe nach einem der Ansprüche 3-4-5-6-7-8-9, dadurch gekennzeichnet, daß die Wählsteuerung nach dem letzten Gang des ersten Bereichs ein Steuersignal auslöst, das gleichzeitig den Befehl erteilt zum Übergang in den zweiten Bereich und zur Änderung des Zustandes des Betätigungsteils (5).

15. Verfahren zum Steuern nach Anspruch 14, dadurch gekennzeichnet, daß ein zweites, vom Positionsfühler (10) stammendes Signal die Änderung des Zustandes eines zweiten Betätigungsteils (9) steuert.

**Claims**

1. An arrangement for the manual control of a mechanical gearbox comprising a gear control lever (1) which is pivotally mounted about a ball joint (11) for actuating a main control rod (2), a lever (12) is fixed with respect to the main control rod (2) which operates a gearbox control slide (4) bearing a selector (7), said lever (12) co-operating for gear selection with a reaction rod (3) which is connected by means of its other end (13) to a fixed element (8), characterised in that it comprises means for modifying one of the elements of the kinematic train comprising at least one actuator (5) which is subject to the control of the range change control, said means being disposed between the knob (14) of the gear control lever (1) and the selector (7), that is to say the control lever (1), the main control rod (2), the reaction rod (3) and the control slide (4), so as to modify the relative position of the knob (14) and the selector (7) with respect to each other.

2. A control arrangement according to claim 1 characterised in that the modification means are applied to the reaction rod (3) and consist of a modification of the length between the end (17) of the lever (12) and the attachment point (18) to the fixed element (8).

3. A control arrangement according to claim 2 characterised in that the means for modifying the length between the end (17) of the lever (12) and the attachment point (18) to the fixed element (8) consist of a bell crank lever (6) of which one of the ends is mounted on a pivot mounting (5) connected to said fixed element (8) and the other end is coupled to the rod (16) of an actuator (5) connected to a fixed element (19) by means of a pivot mounting (20), the bell crank lever (6) being connected to the end (13) of the reaction rod (3).

4. A control arrangement according to claim 2 characterised in that the means for modifying the length between the end (17) of the lever (12) and the attachment point (18) to the fixed element (8) consist of a bell crank lever (6) of which one of the ends is mounted on a pivot mounting (15) connected to said fixed element (8) and the other end is connected to the end (13) of the reaction rod (3), the bell crank lever (6) being coupled to an actuator (5) connected to a fixed element (19) by a pivot mounting (20).

5. A control arrangement according to claim 2 characterised in that the means for modifying the length between the end (17) of the lever (12) and the attachment point (18) to the fixed element (8) consist of a bell crank lever (6) mounted on a pivot mounting (15) connected to said fixed element (8), said bell crank lever (6) being connected by means of one of its ends to the end (13) of the reaction rod (3) and being coupled at the other end to the rod (16) of an actuator (5) connected to a fixed element (19) by a pivot mounting (20).

6. A control arrangement according to claim 2 characterised in that the means for modifying the length between the end (17) of the lever (12) and the attachment point (18) to the fixed element (8) consist of an actuator (5) disposed in the reaction rod (3) along the axis of said reaction rod (3) between the end (17) and the attachment point (18).

7. A control arrangement according to claim 1 characterised in that the modification means are applied to the gearbox control slide (4) and consist of a modification of the length of said control slide (4) by way of an actuator (5) disposed in said control slide (4) along the axis of said control slide (4) between the selector (7) and the main control rod (2).

8. A control arrangement according to claim 1 characterised in that the modification means are applied to the main control rod (2) and consist of two main half-rods (21 and 22) each comprising respectively a lever (23, 24) fixed with respect to said main half-rods (21, 22), the end (26) of the lever (23) being connected to the end (27) of the lever (24) by a connecting rod (25), and actuator (5) being disposed in said connecting rod (25) and along the axis of said connecting rod (25), the two main half-rods (21, 22) being free to rotate with respect to each other and connected in respect of translatory movement by a coupling (30).

9. A control arrangement according to claim 1 characterised in that the modification means are applied to the gear control lever (1) and provide that said control lever (1) comprises two control halflevers (28, 29) which are connected together by a pivot connection (31) in the plane of selection, the two control half-levers (28, 29) each comprising respectively a lever (32, 33) fixed with respect to said control half-levers (28, 29), the end (35) of the lever (32) being connected to the end (36) of the lever (33) by a rod (34), an actuator (5) being disposed in said rod (34) and along the axis of said rod (34).

10. A control arrangement according to one of claims 2, 7, 8 and 9 characterised in that a second actuator (9) is added to the means for modifying the element of the kinematic train in question in such a way as to obtain a second gear selection state.

11. A control arrangement according to claim 10 characterised in that the second actuator (9) is disposed in the reaction rod (3) along the axis of said reaction rod (3) between the end (17) of the lever (12) and the end (13), a position sensor (10) being disposed on the control slide (4).

12. A control arrangement according to one of claims 3, 4, 5, 6, 7, 8 and 9 characterised in that the actuator (5) comprises a jack.

13. A control arrangement according to claim 10 characterised in that the second actuator (9) comprises a jack.

14. A process for the manual control of a mechanical gearbox according to one of claims 3, 4, 5, 6, 7, 8 and 9 characterised in that selection control after the last gear of the first range triggers off a control signal which simultaneously gives the order for a shift to the second range and the change of state of the actuator (5).

15. A control process according to claim 14 characterised in that a second signal emitted by a position sensor (10) controls the change of state of a second actuator (9).

7

EP 0 272 167 B1

# Fig. 1

# FIG 2

EP 0 272 167 B1

# FiG 3

# FiG 4

Fig. 5

Fig. 6

Fig. 7

Fig. 8

Fig 9

EP 0 272 167 B1

Fig. 10